# EUROPÄISCHE PATENTANMELDUNG

(11) **EP 3 029 656 A1**
(43) Veröffentlichungstag der Anmeldung: **08.06.2016**
(21) Anmeldenummer: 15400051.7
(22) Anmeldetag: 03.12.2015
(51) Int. Cl.: G09B 21/00

(54) **FÜHL- UND ABTASTBARES INFORMATIONSMITTEL FÜR BLINDE UND SEHBEHINDERTE UND EINE EINRICHTUNG ZUR HERSTELLUNG DERARTIGER INFORMATIONSMITTEL**

(30) Priorität: 07.12.2014 DE 102014018219; 07.12.2014 DE 202014009725 U
(71) Anmelder: Kimme, Thomas, 09243 Niederfrohna (DE)
(72) Erfinder: Kimme, Thomas, 09243 Niederfrohna (DE)
(74) Vertreter: Krause, Wolfgang

(57) **Zusammenfassung**

Die Erfindung betrifft fühl- und abtastbare Informationsmittel für Blinde und Sehbehinderte und eine Einrichtung zur Herstellung derartiger Informationsmittel. Diese zeichnen sich insbesondere dadurch aus, dass einfache und langlebige fühl- und abtastbare Informationsmittel ökonomisch günstig bereitstellbar sind. Dazu weist das Informationsmittel einen Träger mit erhabenen Schweißpunkten und/oder Schweißraupen auf, die weiterhin aus einem Metall oder einer Metalllegierung bestehen. Zur Herstellung dieser Informationsmittel wird ein additives Laserauftragschweißen angewandt. Eine Einrichtung umfasst einen Laser, eine den Laserstrahl des Lasers über den Träger führende Einrichtung, eine Metallpulver aufbringende oder einen Draht zuführende Einrichtung und eine Steuereinrichtung.

## Beschreibung

Die Erfindung betrifft fühl- und abtastbare Informationsmittel für Blinde und Sehbehinderte und eine Einrichtung zur Herstellung derartiger Informationsmittel.

Durch die Druckschrift DE 196 46 331 C2 ist ein Verfahren zur lokalen plastischen Verformung durch einen Laser bekannt. Dabei wird durch einen fokussierten Laserstrahl ein Substrat durch eine darauf angeordnete Deckschicht erhitzt. Dabei handelt es sich um ein Verbundwerkstoff, der aus dem Substrat und der mit dem Substrat kraftschlüssig verbundenen plastisch verformbaren Deckschicht besteht. Eine Ausdehnung oder eine Ansammlung gasförmiger Komponenten des Substrats führt zu einer plastischen Verformung der Deckschicht.

Die Druckschrift DE 20 2004 015 355 U1 beinhaltet eine Laser-prozessierbare Blindenschrift. Grundlage ist ein chemischer Lack, bestehend vorzugsweise aus polymeren Verbindungen mit Zusatzstoffen, die bei einer lokalen Erwärmung zu einer deutlichen Volumenzunahme auf Grund einer oder mehrerer chemischer Reaktionen führen. Für ein Informationsmittel mit einer Vielzahl von Berührungen und Abtastungen ist diese Schrift wenig geeignet.

Aus der Druckschrift EP 2 305 483 A1 ist ein Verfahren zur Herstellung von Druckerzeugnissen mit einem taktilen Aufdruck bekannt. Dabei werden Druckfarben schichtweise auf einen Träger aufgedruckt, bis eine tastbare Erhebung gebildet ist. Nach jedem Druckdurchgang wird wird der Druckfarbstoff durch Lichteinwirkung, insbesondere durch Einwirkung von UV-Licht, ausgehärtet. Damit sind auch Informationstafeln mit tastbaren streifenförmigen oder punktförmigen Strukturen herstellbar.

Die Druckschrift DE 20 2008 013 569 U1 beinhaltet eine Einrichtung zum Aufbringen von Schichtstrukturen auf wenigstens ein Substrat mittels Laserauftragschweißen. Damit lassen sich vorbestimmte Schichten in Linienform, Schichten als Punktraster oder dreidimensionale Strukturen erzeugen. In einer Ausführungsform können Schichtstrukturen beispielsweise als Segmente von Turbinenschaufeln entstehen.

Der in den Patentansprüchen 1 und 14 angegebenen Erfindung liegt die Aufgabe zugrunde, ein einfaches und langlebiges fühl- und abtastbares Informationsmittel für Blinde und Sehbehinderte ökonomisch günstig bereitzustellen.

Diese Aufgabe wird mit den in den Patentansprüchen 1 und 14 aufgeführten Merkmalen gelöst.

Die fühl- und abtastbaren Informationsmittel für Blinde und Sehbehinderte zeichnen sich insbesondere dadurch aus, dass einfache und langlebige fühl- und abtastbare Informationsmittel ökonomisch günstig bereitstellbar sind.

Dazu weist das Informationsmittel einen Träger mit erhabenen Schweißpunkten und/oder Schweißraupen auf, die weiterhin aus einem Metall oder einer Metalllegierung bestehen.

Zur Herstellung dieser Informationsmittel wird ein additives Verfahren angewandt. Damit entstehen gegenüber abtragenden Verfahren keine Abprodukte, die sowohl transportiert und entsorgt oder wiederaufbereitet werden müssen. Damit können die Informationsmittel ökonomisch günstig bereitgestellt werden.

Die Anwendung/Verwendung von Schweißverfahren führen weiterhin dazu, dass der Träger partiell und die Schweißpunkte und/oder Schweißraupen aufgeschmolzen werden. Durch dabei wirkenden Oberflächenspannungen ergeben sich keine Kanten. Die Schweißpunkte besitzen die Form einer Kugelkappe oder Halbkugel. Die Schweißraupen weisen im Querschnitt eine Bogenform oder einen Kreisabschnitt auf, so dass keine Gefährdungen zu verzeichnen sind.

Für das Aufbringen kann insbesondere das Laserauftragschweißen verwendet werden. Mittels einem Datenverarbeitungssystem als Steuerung können auch Informationsmittel als Einzelstücke oder kleine bis mittlere Lösgroßen ökonomisch günstig hergestellt werden.

Eine Einrichtung zur Herstellung fühl- und abtastbarer Informationsmittel für Blinde und Sehbehinderte weist dazu im Wesentlichen einen Laser, eine den Laserstrahl des Lasers über den Träger führende Einrichtung in Strahlrichtung nach dem Laser, eine Metallpulver aufbringende oder einen Draht zuführende Einrichtung und eine mit dem Laser und den Einrichtungen verbundene Steuereinrichtung auf, so dass Schweißpunkte und/oder Schweißraupen an vorgegebene Stellen auf den Träger durch Laserauftragschweißen platzierbar sind.

Vorteilhafte Ausgestaltungen der Erfindung sind in den Patentansprüchen 2 bis 13 angegeben.

Schweißpunkte sind nach der Weiterbildung des Patentanspruchs 2 die Punkte von Buchstaben und Zeichen der Brailleschrift. Abkürzungen, Wörter, Wortkombinationen und Sätze können leicht auf dem Träger aufgebracht werden.

Schweißraupen sind nach der Weiterbildung des Patentanspruchs 3 Zeichen und/oder eine Profilschrift. Zeichen sind dazu beispielsweise Pfeile zur Orientierungshilfe. Die Profilschaft besteht vorteilhafterweise aus erhabenen Buchstaben.

Schweißraupen sind nach der Weiterbildung des Patentanspruchs 4 der Grundriss eines Gebäudes. Letztere sind insbesondere öffentlich zugängliche Gebäude, so dass für den Sehbehinderten oder Blinden eine Orientierungshilfe gegeben ist.

Schweißraupen sind nach der Weiterbildung des Patentanspruchs 5 der Grundriss wenigstens eines Raumes eines Gebäudes. In Verbindung mit Buchstaben oder angedeuteten Gegenständen des Raumes ist für Sehbehinderte und Blinde eine leichte Orientierung in Räumen gegeben.

Schweißpunkte und/oder Schweißraupen sind nach der Weiterbildung des Patentanspruchs 6 die Kontur wenigstens eines nachgebildeten Gegenstandes.

Die Schweißpunkte und/oder die Schweißraupen sind nach der Weiterbildung des Patentanspruchs 7 durch Laserauftragschweißen mit einem gesteuert platzierbaren oder über die Oberfläche des Trägers bewegbaren Laserstrahl eines Lasers ausgebildete Schweißpunkte und/oder Schweißraupen. Mittels eines Lasers als ein hocheffizientes Bearbeitungsmittel können in Verbindung mit zugeführtem Material, beispielsweise Schweißdraht, ökonomisch günstig Informationsmittel hergestellt werden. Die Steuerung führt mittels der dazu eingesetzten Software dazu, dass auch speziell ausgeführte Informationsmittel entsprechend den vorhandenen Bedingungen einfach und ökonomisch herstellbar sind. Das kann vorteilhafterweise über die programmierte Brailleschrift, Profilschrift und/oder vorgegebene geometrische Grundstrukturen erfolgen, so dass durch Kombinationen auch individuelle Informationsmittel einfach zu realisieren sind. Neben einer Drahtzuführung kann das zugeführte Material auch als Pulver aufgebracht sein oder werden. Das kann flächig oder partiell entsprechend der aufzubringenden Struktur erfolgen.

Der Schweißpunkt ist nach der Weiterbildung des Patentanspruchs 8 aus mehreren aufgebrachten und damit übereinander angeordneten Schweißpunkten ausgebildet. Damit können auch hohe Strukturen auf dem Träger erzeugt werden. Das können auch Gebäude wie beispielsweise Türme sein.

Die Schweißraupe ist nach der Weiterbildung des Patentanspruchs 9 aus mehreren aufgebrachten und damit übereinander angeordneten Schweißraupen ausgebildet. So können auch unterschiedlich hohe Gebäude in ihrem Verhältnis zu anderen Gebäuden auf das Informationsmittel aufgebracht werden.

In Fortführung können die Schweißraupen nach der Weiterbildung des Patentanspruchs 10 die gleiche Länge aufweisen. Darüber hinaus kann auch wenigstens eine der Schweißraupen kürzer als die wenigstens eine andere Schweißraupe. Damit sind die unterschiedlichsten Gegenstände in ihrer Kontur nachbildbar.

Vorteilhafterweise ist der Träger nach der Weiterbildung des Patentanspruchs 11 eine Platte, ein Quader, ein Kubus, eine Pyramide, ein Pyramidenstumpf oder ein Kegelstumpf.

Die Kontur des Trägers ist nach der Weiterbildung des Patentanspruchs 12 selbst ein Informationsmittel. Das können die unterschiedlichsten Grundrisse sein. In Fortführung kann die Kontur des Trägers ein Zeichen oder eine nachgebildete Grundfläche eines Gegenstandes sein. Das kann beispielsweise ein Pfeil sein.

Vorteilhafterweise bestehen der Träger und die Schweißpunkte und/oder die Schweißraupen nach der Weiterbildung des Patentanspruchs 13 aus Stahl, Nickel, Titan, Kupfer oder einer Legierung auf Basis von Eisen, Nickel, Titan oder Kupfer einzeln oder in einer Kombination. Damit ist eine lange Lebensdauer des Informationsmittels gegeben.

Ein Ausführungsbeispiel der Erfindung ist in den Zeichnungen jeweils prinzipiell dargestellt und wird im Folgenden näher beschrieben.

Es zeigen:
- Fig. 1: ein fühl- und abtastbares Informationsmittel für Blinde und Sehbehinderte in einer Draufsicht,
- Fig. 2: ein Informationsmittel mit einem Grundriss eines Gebäudes in Form einer Burg in einer Draufsicht,
- Fig. 3: eine Schnittdarstellung eines derartigen Informationsmittels und
- Fig. 4: eine Einrichtung zur Herstellung eines fühl- und abtastbaren Informationsmittels.

Ein fühl- und abtastbares Informationsmittel für Blinde und Sehbehinderte besteht im Wesentlichen aus einem Träger 1 mit erhabenen Schweißpunkten 2 und/oder Schweißraupen 3.

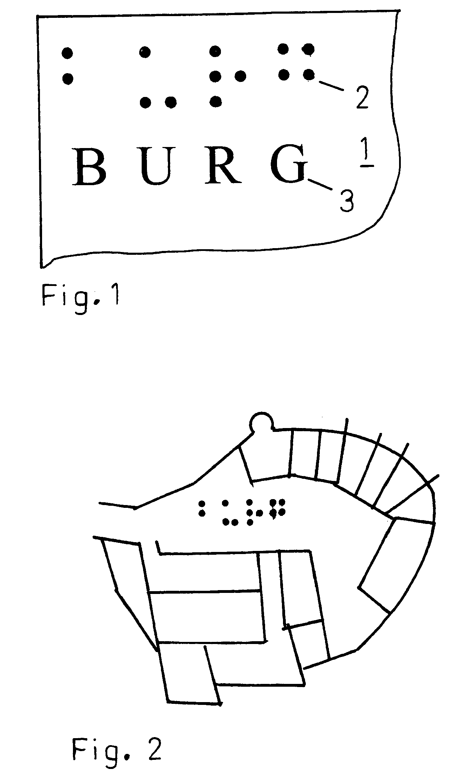

Es zeigen die
Fig. 1 ein fühl- und abtastbares Informationsmittel für Blinde und Sehbehinderte in einer Draufsicht,
Fig. 2 ein Informationsmittel mit einem Grundriss eines Gebäudes in Form einer Burg in einer Draufsicht und

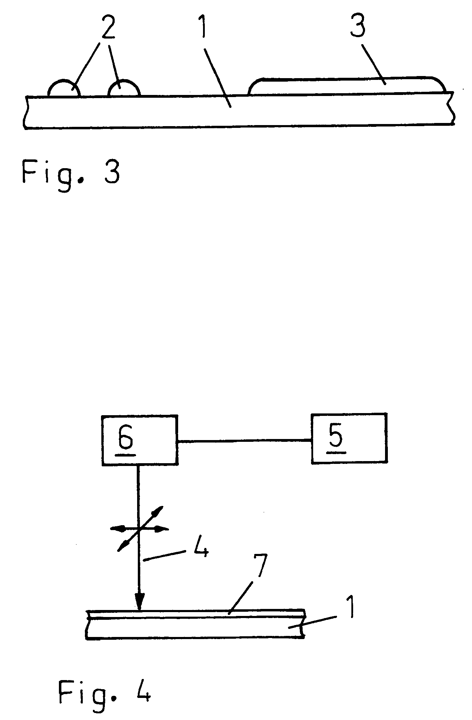

Fig. 3 eine Schnittdarstellung eines derartigen Informationsmittels jeweils in prinzipiellen Darstellungen.

Die Schweißpunkte 2 sind die Punkte von Buchstaben und Zeichen der Brailleschrift. Die Schweißpunkte 2 sind damit Halbkugeln, die einen Durchmesser von jeweils einschließlich 0,1 mm bis etwa 2 mm aufweisen können. Der Schweißpunkt 2 kann auch aus mehreren aufgebrachten und damit übereinander angeordneten Schweißpunkten 2 ausgebildet sein.

Die Schweißraupen 3 sind
- Buchstaben einer Profilschicht,
- Zeichen,
- der Grundriss eines Gebäudes, beispielsweise einer Burg, und/oder
- der Grundriss wenigstens eines Raumes eines Gebäudes.

Die Einzelspuren der Schweißraupen 3 können in Spurbreiten von jeweils einschließlich 0,1 mm bis 8 mm Breite erzeugt werden.

Schweißpunkte 2 und/oder Schweißraupen 3 können darüber hinaus auch die Kontur wenigstens eines nachgebildeten Gegenstandes sein.

Die Schweißraupe 3 ist in einer weiteren Ausführungsform aus mehreren aufgebrachten und damit übereinander angeordneten Schweißraupen 3 ausgebildet, wobei diese die gleiche Länge aufweisen können oder wenigstens eine der Schweißraupen 3 kürzer als die wenigstens eine andere Schweißraupe 3 sein kann.

Der Träger 1 ist eine Platte oder ein Kubus, wobei die Kontur des Trägers 1 selbst ein Informationsmittel sein kann. Dabei kann die Kontur des Trägers 1 ein Zeichen sein.

Der Träger 1 und die Schweißpunkte 2 und/oder die Schweißraupen 3 bestehen aus Stahl, Nickel, Titan, Kupfer oder einer Legierung auf Basis von Nickel, Titan oder Kupfer einzeln oder in einer Kombination.

Die Fig. 4 zeigt eine Einrichtung zur Herstellung eines fühl- und abtastbaren Informationsmittels in einer prinzipiellen Darstellung.

Die Schweißpunkte 2 und/oder die Schweißraupen 3 sind durch Laserauftragschweißen mit einem gesteuert platzierbaren oder über die Oberfläche des Trägers 1 bewegbaren Laserstrahl 4 eines Lasers 5 ausgebildete Schweißpunkte 2 und/oder Schweißraupen 3.

Eine Einrichtung dazu besteht im Wesentlichen aus dem Laser 5, einer den Laserstrahl 4 des Lasers 5 über den Träger 1 führenden Einrichtung 6 und einer Metallpulver 7 aufbringenden oder einen Draht zuführenden Einrichtung. Diese Bestandteile sind mit einer Steuereinrichtung beispielsweise einem Datenverarbeitungssystem verbunden, so dass Schweißpunkte 2 und/oder Schweißraupen 3 an vorgegebene Stellen auf den Träger 1 platzierbar sind. Als Laser 5 kann dazu ein Festkörperlaser mit Leistungen von 10 Watt bis über 2 kW eingesetzt werden. Die Zusatzwerkstoffzufuhr erfolgt typischerweise als Metallpulver-Patentgasgemisch oder als Drahtzufuhr.

## Patentansprüche

1. Fühl- und abtastbares Informationsmittel für Blinde und Sehbehinderte, **dadurch gekennzeichnet, dass** das Informationsmittel einen Träger (1) mit erhabenen Schweißpunkten (2) und/oder Schweißraupen (3) aufweist und dass der Träger (1) und die Schweißpunkte (2) und/oder Schweißraupen (3) aus einem Metall oder einer Metalllegierung bestehen.

2. Informationsmittel nach Patentanspruch 1, **dadurch gekennzeichnet, dass** Schweißpunkte (2) die Punkte von Buchstaben und Zeichen der Brailleschrift sind.

3. Informationsmittel nach Patentanspruch 1, **dadurch gekennzeichnet, dass** Schweißraupen (3) Zeichen und/oder eine Profilschrift sind.

4. Informationsmittel nach Patentanspruch 1, **dadurch gekennzeichnet, dass** Schweißraupen (3) der Grundriss eines Gebäudes sind.

5. Informationsmittel nach Patentanspruch 1, **dadurch gekennzeichnet, dass** Schweißraupen (3) der Grundriss wenigstens eines Raumes eines Gebäudes sind.

6. Informationsmittel nach Patentanspruch 1, **dadurch gekennzeichnet, dass** Schweißpunkte (2) und/oder Schweißraupen (3) die Kontur wenigstens eines nachgebildeten Gegenstandes sind.

7. Informationsmittel nach Patentanspruch 1, **dadurch gekennzeichnet, dass** die Schweißpunkte (2) und/oder die Schweißraupen (3) durch Laserauftragschweißen mit einem gesteuert platzierbaren oder über die Oberfläche des Trägers (1) bewegbaren Laserstrahl (4) eines Lasers (5) ausgebildete Schweißpunkte (2) und/oder Schweißraupen (3) sind.

8. Informationsmittel nach Patentanspruch 1, **dadurch gekennzeichnet, dass** der Schweißpunkt (2) aus mehreren aufgebrachten und damit übereinander angeordneten Schweißpunkten (2) ausgebildet ist.

9. Informationsmittel nach Patentanspruch 1, **dadurch gekennzeichnet, dass** die Schweißraupe (3) aus mehreren aufgebrachten und damit übereinander angeordneten Schweißraupen (3) ausgebildet ist.

10. Informationsmittel nach Patentanspruch 1, **dadurch gekennzeichnet, dass** die Schweißraupen (3) die gleiche Länge aufweisen und/oder dass wenigstens eine der Schweißraupen (3) kürzer als die wenigstens eine andere Schweißraupe (3) ist.

11. Informationsmittel nach Patentanspruch 1, **dadurch gekennzeichnet, dass** der Träger (1) eine Platte, ein Quader, ein Kubus, eine Pyramide, ein Pyramidenstumpf oder ein Kegelstumpf.

12. Informationsmittel nach Patentanspruch 1, **dadurch gekennzeichnet, dass** die Kontur des Trägers (1) selbst ein Informationsmittel ist und/oder dass die Kontur des Trägers (1) ein Zeichen oder eine nachgebildete Grundfläche eines Gegenstandes ist.

13. Informationsmittel nach Patentanspruch 1, **dadurch gekennzeichnet, dass** der Träger (1) und die Schweißpunkte (2) und/oder die Schweißraupen (3) aus Stahl, Nickel, Titan, Kupfer oder einer Legierung auf Basis von Nickel, Titan oder Kupfer einzeln oder in einer Kombination bestehen.

14. Einrichtung zur Herstellung fühl- und abtastbarer Informationsmittel für Blinde und Sehbehinderte nach Anspruch 1 mit einem Laser (5), einer den Laserstrahl (4) des Lasers (5) über den Träger (1) führenden Einrichtung (6) in Strahlrichtung nach dem Laser (5), einer Metallpulver aufbringenden oder einen Draht zuführenden Einrichtung und einer mit dem Laser (5) und den Einrichtungen verbundenen Steuereinrichtung, so dass Schweißpunkte (2) und/oder Schweißraupen (3) an vorgegebene Stellen auf den Träger (1) durch Laserauftragschweißen platzierbar sind.
